# EUROPEAN PATENT APPLICATION

(11) **EP 4 052 941 A1**
(43) Date of publication of application: **07.09.2022**
(21) Application number: 20880653.9
(22) Date of filing: 18.09.2020
(51) Int. Cl.: B60J 10/75

(54) **VEHICLE MOLDING**

(30) Priority: 30.10.2019 JP 2019197120
(71) Applicant: Faltec Co., Ltd., Kawasaki-shi, Kanagawa 212-0013 (JP)
(72) Inventor: MITOBE Tomoya, Kawasaki-shi, Kanagawa 212-0013 (JP); TSURUSAKI Nao, Kawasaki-shi, Kanagawa 212-0013 (JP); INABA Miyuki, Kawasaki-shi, Kanagawa 212-0013 (JP)
(74) Representative: Troesch Scheidegger Werner AG
(86) International application number: PCT/JP2020/035463
(87) International publication number: WO 2021/084967

(57) **Abstract**

A vehicle molding (1) includes a base part (2) connected to a door panel (11), and an upper touch lip (3) and a lower touch lip (4) supported by the base part (2) and arranged in a vertical direction, in which the upper touch lip (3) includes a root part (3a) fixed to the base part (2), a sliding part (3b) connected to a tip of the root part (3a) and sliding with respect to a door glass, and a seal part (3c) that extends from a tip of the sliding part (3b) toward the base part (2) and has a tip part (3c1) attachable to and detachable from the base part (2), and the lower touch lip (4) includes a root part (4a) fixed to the base part (2), a sliding part (4b) connected to a tip of the root part (4a) and sliding with respect to the door glass, and a reaction force adjustment projection part (4c) that projects from the sliding part (4b) toward the base part (2), the reaction force adjustment projection part being configured to generate a reaction force acting on the door glass from the sliding part (4b) by coming in contact with the base part (2).

## Description

### [Technical Field]

The present disclosure relates to a vehicle molding.

This application claims Priority claimed on Japanese Patent Application No. 2019-197120, filed on October 30, 2019, the content of which is incorporated herein by reference.

### [Background Art]

In recent years, vehicles such as four-wheeled vehicles have been equipped with a molding such as an outside molding. The outside molding is attached to an upper edge part of a door panel and prevents foreign materials and water from entering between the outside molding and a door glass of the door panel. The outside molding has a base part attached to the door panel and a plurality of lips provided projecting from the base part toward the door panel. For example, Patent Document 1 discloses an outside molding including two touch lips abutting on a door glass.

### [Citation List]

### [Patent Document]

[Patent Document 1]
Japanese Unexamined Patent Application, First Publication No. 2012-171559

### [Summary of Invention]

### [Technical Problem]

In the outside molding disclosed in Patent Document 1, a sub lip is formed on a lower touch lip of two touch lips disposed on a lower side, so that sealability is improved by increasing pressing force when a door glass is closed while suppressing a sliding resistance when the door glass is raised and lowered.

When water adhered to the door glass flows between the touch lip and a base part, the resistance when the door glass is raised and lowered increases, for example, due to freezing of water that has flowed in, and as a result, there is a possibility of a load on a drive system of the door glass increasing, for example. In order to suppress entry of water, it is conceivable to provide a part that always abuts on the door glass to an upper touch lip. However, when the upper touch lip is always strongly pressed against the door glass regardless of a lifting position of the door glass, there is a possibility that an effect obtained by providing the sub lip on the lower touch lip may be reduced.

The present invention has been made in view of the above-mentioned problems, and an object of the present invention is to make it possible to suppress the entry of water while suppressing an increase in the sliding resistance when a door glass is raised and lowered.

### [Solution to Problem]

A vehicle molding according to an aspect of the present invention includes: a base part connected to a door panel; and an upper touch lip and a lower touch lip supported by the base part and arranged in a vertical direction, in which the upper touch lip includes an upper root part fixed to the base part, an upper sliding part connected to a tip of the upper root part and sliding with respect to an opening and closing type door glass, and a seal part that extends from a tip of the upper sliding part toward the base part and has a tip part attachable to and detachable from the base part, and the lower touch lip includes a lower root part fixed to the base part, a lower sliding part connected to a tip of the lower root part and sliding with respect to the opening and closing type door glass, and a reaction force adjustment projection part that projects from the lower sliding part toward the base part, the reaction force adjustment projection part being configured to generate a reaction force acting on the opening and closing type door glass from the lower sliding part by coming in contact with the base part.

In the vehicle molding according to the above aspect, the tip part of the seal part may be bent, with respect to a part of the seal part between the tip part and the tip of the upper sliding part, to be close to a state in which the tip part of the seal part is parallel to the base part.

In the vehicle molding according to the above aspect, the base part may include an upper wall part on which the seal part of the upper touch lip abuts, an intermediate wall part disposed below the upper wall part and to which the upper root part of the upper touch lip is fixed, and a lower wall part disposed below the intermediate wall part and to which the lower root part of the lower touch lip is fixed and with which the reaction force adjustment projection part of the lower root part is brought into contact, and the lower wall part may be disposed closer to an opening and closing type door glass side than the upper wall part.

In the vehicle molding according to the above aspect, the intermediate wall part may have a fixing surface to which the upper root part is fixed, and the fixing surface may be an inclined surface extending to the opening and closing type door glass side as the inclined surface extends from an upper wall part side toward a lower wall part side.

In the vehicle molding according to the above aspect, the lower root part may extend from a surface of the base part, to which the lower root part is fixed, in a normal direction of the surface of the base part, and an upper surface and a lower surface of the lower root part may be parallel to each other over a certain distance from the surface of the base part.

In the vehicle molding according to the above aspect, a posture of the reaction force adjustment projection part with respect to the lower sliding part may be set such that, as the lower sliding part tilts toward the base part, the reaction force adjustment projection part is pressed by the base part, and a tip part of the reaction force adjustment projection part approaches the lower sliding part.

### [Advantageous Effects of Invention]

According to the present invention, since an upper touch lip includes a seal part that extends from a tip of an upper sliding part toward a base part, the seal part can suppress water from entering between the upper touch lip and the base part. Further, a tip of the seal part is attachable to and detachable from the base part. The tip part of the seal part is not fixed to the upper sliding part or the upper root part, and is a free end. Therefore, the upper sliding part can be tilted with a smaller force as compared with a case where the tip part of the seal part is fixed to the upper sliding part or the upper root part. Therefore, it is possible to reduce a sliding resistance received from the upper touch lip when an opening and closing type door glass is raised and lowered. In addition to this, the vehicle molding according to the present invention includes a reaction force adjustment projection part that generates a reaction force acting on the opening and closing type door glass from a lower sliding part by a lower touch lip coming in contact with the base part, and it is possible for a strong pressing force to act on the door glass as needed while suppressing an increase in the sliding resistance when the door glass is raised and lowered. Therefore, according to the present invention, in addition to an effect of improving sealability as needed while suppressing an increase in the sliding resistance when the door glass is raised and lowered by the lower touch lip, it is possible to suppress entry of water between the upper touch lip and the base part by the upper touch lip. Therefore, according to the present invention, it is possible to suppress the entry of water while suppressing an increase in the sliding resistance when the door glass is raised and lowered.

### [Brief Description of Drawings]

Fig. 1 is a front view showing a front door of a vehicle on which an outside molding according to an embodiment of the present invention is installed.
Fig. 2 is a cross-sectional view showing the outside molding according to the embodiment of the present invention, and is a cross-sectional view along a line A-A of Fig. 1.
Fig. 3 is a cross-sectional view showing the outside molding according to the embodiment of the present invention in which an upper touch lip and a lower touch lip are in an intermediate posture.
Fig. 4 is a cross-sectional view showing the outside molding according to the embodiment of the present invention in which the upper touch lip and the lower touch lip are in a closed posture.

### [Description of Embodiments]

Hereinafter, an embodiment of a vehicle molding according to the present invention will be described with reference to the drawings.

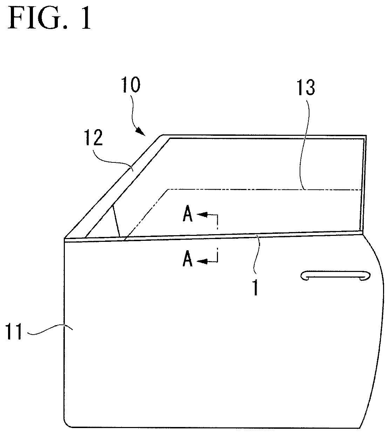

Fig. 1 is a front view showing a front door 10 of a vehicle on which an outside molding 1 (a vehicle molding) of the present embodiment is installed. As shown in Fig. 1, the front door 10 of the vehicle includes a door panel 11, a window frame 12, a door glass 13 (an opening and closing type door glass), and the outside molding 1. The door panel 11 is a strength member formed of a steel sheet, and has, for example, a door outer panel which is an exterior panel and a door inner panel disposed inside the door outer panel. The window frame 12 is provided on the upper part of the door panel 11. The door glass 13 is disposed in an area surrounded by the window frame 12, and is raised and lowered by a lifting mechanism (not shown).

The outside molding 1 of the present embodiment is a long-shaped component that extends in a front-rear direction (a left-right direction in Fig. 1) of the vehicle and is fixed to the upper end of the door panel 11. The outside molding 1 is disposed to fill a gap between the door panel 11 and the door glass 13.

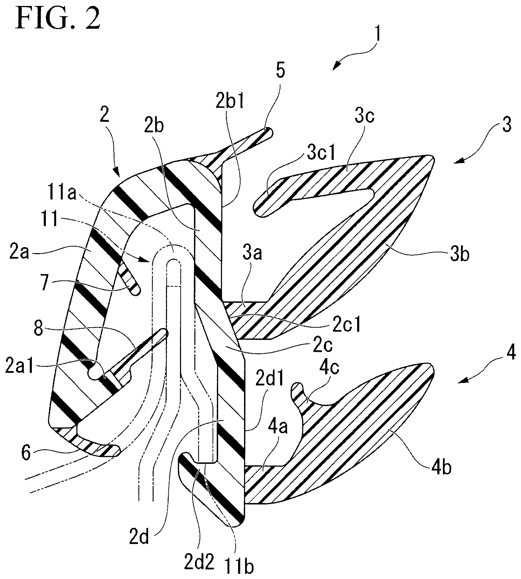

Fig. 2 is a cross-sectional view along a line A-A of Fig. 1. As shown in Fig. 2, the upper end part of the door panel 11 to which the outside molding 1 of the present embodiment is attached is folded back from the outside toward the inside of the vehicle. Hereinafter, the folded part of the door panel 11 is referred to as a folded part 11a. The folded part 11a of the door panel 11 is provided from one end to the other end in the front-rear direction of the vehicle.

As shown in Fig. 2, the outside molding 1 of the present embodiment includes a base part 2, an upper touch lip 3, a lower touch lip 4, a decorative lip 5, a cushioning lip 6, an upper tilt-preventing part 7, and a lower tilt-preventing part 8. The end part of the base part 2 is, for example, an open end and is equipped with an end cap.

The base part 2 is a strength member for ensuring the rigidity of the outside molding 1 of the present embodiment and is formed of, for example, a hard resin. The base part 2 is disposed in an extending direction of the outside molding 1. As shown in Fig. 2, the base part 2 is formed by integrating an exterior wall part 2a, an upper wall part 2b, an intermediate wall part 2c, and a lower wall part 2d. Further, the upper wall part 2b, the intermediate wall part 2c, and the lower wall part 2d are disposed opposite the exterior wall part 2a such that the base part 2 has an inverted U-shape as a whole in a cross-sectional shape.

The exterior wall part 2a is disposed toward the outside of the vehicle when the outside molding 1 is equipped on the door panel 11. The upper end of the exterior wall part 2a is curved and connected to the upper end of the upper wall part 2b. Further, the exterior wall part 2a has a lower end projection part 2a1 projecting from the inner wall surface of the lower end part of the exterior wall part 2a toward the inside of the base part 2 (toward a side of the upper wall part 2b or the like). The outer surface of the exterior wall part 2a is a design surface that can be visually recognized from the outside. A surface treatment may be performed on the outer surface of the exterior wall part 2a in order to improve weather resistance and design.

The upper wall part 2b extends downward from the upper end of the exterior wall part 2a. A vertical dimension of the upper wall part 2b is about half of the vertical dimension of the exterior wall part 2a, and the outside surface (a surface on the upper touch lip 3 side) of the upper wall part 2b extends substantially vertically. The outside surface of the upper wall part 2b is a sealing surface 2b1 with which a seal part 3c of the upper touch lip 3, which will be described below, can come in contact.

The upper end of the intermediate wall part 2c is connected to the lower end of the upper wall part 2b, and the lower end of the intermediate wall part 2c is connected to the upper end of the lower wall part 2d. That is, the intermediate wall part 2c is disposed between the upper wall part 2b and the lower wall part 2d, and connects the upper wall part 2b and the lower wall part 2d. As shown in Fig. 2, the intermediate wall part 2c is inclined to extend (be displaced) toward the door glass 13 side (away from the exterior wall part 2a) as the intermediate wall part 2c extends downward. The outside surface (a surface on the upper touch lip 3 side) of the intermediate wall part 2c is an inclined surface 2c1 that extends (is displaced) to the door glass 13 side as the inclined surface 2c1 extends from the upper wall part 2b side toward the lower wall part 2d side. A root part 3a (an upper root part) of the upper touch lip 3, which will be described below, is fixed to the inclined surface 2c1. A vertical dimension of the intermediate wall part 2c is set smaller than the vertical dimension of the upper wall part 2b, and the lower end of the intermediate wall part 2c is located above the lower end of the exterior wall part 2a.

The lower wall part 2d extends downward from the lower end of the intermediate wall part 2c. A vertical dimension of the lower wall part 2d is about the same as the vertical dimension of the upper wall part 2b, and the lower end of the lower wall part 2d is located below the lower end of the exterior wall part 2a. Further, the outside surface (a surface on the lower touch lip 4 side) of the lower wall part 2d extends substantially vertically. A root part 4a (a lower root part) of the lower touch lip 4, which will be described below, is fixed to the outside surface of the lower wall part 2d, and the outside surface of the lower wall part 2d is a contact surface 2d1 with which a reaction force adjustment projection part 4c of the lower touch lip 4, which will be described below, is brought into contact.

In the present embodiment, as shown in Fig. 2, the lower wall part 2d is disposed closer to the door glass 13 side (a side on which the upper touch lip 3 and the lower touch lip 4 are disposed) than the upper wall part 2b. As a result, the contact surface 2d1 of the lower wall part 2d is disposed closer to the door glass 13 side than the sealing surface 2b1 of the upper wall part 2b.

Further, as shown in Fig. 2, the lower wall part 2d has a retaining part 2d2 projecting from the inner wall surface of the lower end part of the lower wall part 2d toward the inside of the base part 2 (toward the exterior wall part 2a side). The retaining part 2d2 is curved from the lower end part of the lower wall part 2d, and the retaining part 2d2 prevents the outside molding 1 from being easily detached from the door panel 11 by abutting a tip 11b of the door panel 11, which faces downward, on the retaining part 2d2 from above.

The upper touch lip 3, the lower touch lip 4, the decorative lip 5, the cushioning lip 6, the upper tilt-preventing part 7 and the lower tilt-preventing part 8 are fixed to the base part 2, and are, for example, formed of soft resins. Among these, the upper touch lip 3 and the lower touch lip 4 slidably abut on the surface of the door glass 13. In the present embodiment, the door glass 13 is slightly inclined toward the outside of the vehicle as the door glass 13 extends toward the lower end, and is raised and lowered while maintaining the inclined posture. Therefore, when the door glass 13 is located at the uppermost position, that is, when the door glass 13 is in a closed state, the door glass 13 is closest to the outside molding 1. Further, as the door glass 13 is opened, that is, as the door glass 13 is lowered, the door glass 13 gradually separates from the outside molding 1.

Fig. 2 shows a state in which the door glass 13 is completely opened and the door glass 13 does not abut on the upper touch lip 3 or the lower touch lip 4. That is, in Fig. 2, the upper touch lip 3 and the lower touch lip 4 do not receive the pressing force from the door glass 13. The posture of the upper touch lip 3 and the lower touch lip 4 shown in Fig. 2 is referred to as a reference posture.

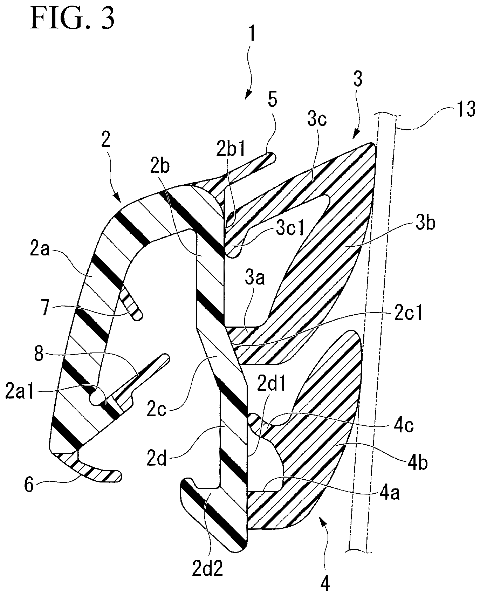

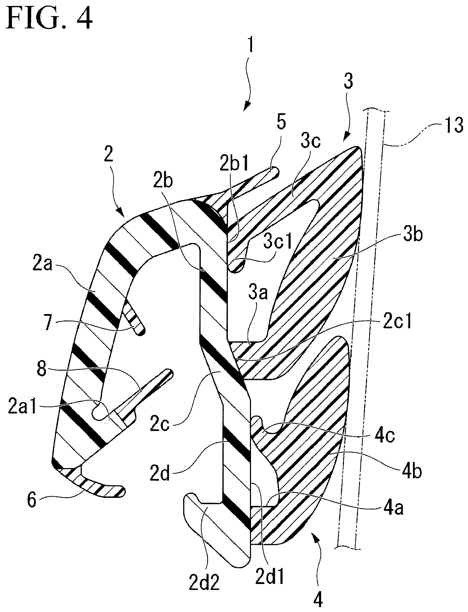

As the door glass 13 comes closer to the closed state from the completely open state, the door glass 13 approaches the upper touch lip 3 and the lower touch lip 4, and the pressing force received by the upper touch lip 3 and the lower touch lip 4 from the door glass 13 gradually increases. Further, the upper touch lip 3 and the lower touch lip 4 are tilted toward the base part 2 side as the door glass 13 comes closer to the closed state. Fig. 4 shows a state in which the door glass 13 is completely closed. The posture of the upper touch lip 3 and the lower touch lip 4 shown in Fig. 4 is referred to as a closed posture. Fig. 3 shows a case where the upper touch lip 3 and the lower touch lip 4 are in an intermediate posture between the reference posture and the closed posture.

As shown in Figs. 2 to 4, the upper touch lip 3 is tilted between the reference posture and the closed posture in accordance with the door glass 13 being opened and closed. The upper touch lip 3 has the root part 3a (an upper root part), a sliding part 3b (an upper sliding part), and the seal part 3c. The root part 3a of the upper touch lip 3 is directly fixed to the base part 2. In the present embodiment, the root part 3a of the upper touch lip 3 is fixedly formed on the inclined surface 2c1 of the intermediate wall part 2c of the base part 2. As shown in Figs. 2 to 4, the root part 3a extends from the inclined surface 2c1 in a horizontal direction. The sliding part 3b is connected to the tip of the root part 3a. In vertical sections shown in Figs. 2 to 4, the upper surface and the lower surface of the root part 3a are parallel to each other for a certain distance from the inclined surface 2c1 toward the tip of the root part 3a to which the sliding part 3b is connected. Thereafter, the surface of the sliding part 3b is connected to the upper surface of the root part 3a to be bent upward from the upper surface of the root part 3a, and the lower surface of the root part 3a is curved upward and connected to the surface of the sliding part 3b. That is, in the present embodiment, the root part 3a does not have a constricted part formed such that both the upper surface and the lower surface approach each other, over a range between a part fixed to the intermediate wall part 2c and a part connected to the sliding part 3b. According to such a root part 3a, since a part where a thickness dimension is locally reduced is not provided, it is possible to prevent a tilting center from being concentrated at any one place when the sliding part 3b is pressed and tilted by the door glass 13. Therefore, it is possible to prevent only one location of a connection part of the root part 3a with the sliding part 3b from being locally fatigued.

As shown in Figs. 2 to 4, the sliding part 3b extends obliquely upward, toward a side opposite to the base part 2 (toward the door glass 13 side), from the root part 3a and directly abuts on the door glass 13. The sliding part 3b slides with respect to the surface of the door glass 13 when the door glass 13 is raised and lowered. Further, the central part of the sliding part 3b bulges as compared with both end parts (an end part on the root part 3a side and an end part on the tip side to which the seal part 3c is connected) of the sliding part 3b. That is, in a direction from the root part 3a toward the tip of the sliding part 3b (an extending direction of the sliding part 3b), a thickness dimension of the central part of the sliding part 3b is the largest, and a thickness dimension of both end parts (the end part on the root part 3a side and the end part on the tip side to which the seal part 3c is connected) of the sliding part 3b is smaller than the thickness dimension of the central part. Although not shown in Figs. 2 to 4, a low friction layer that reduces the sliding resistance with the door glass 13 may be formed on the surface of the sliding part 3b.

The seal part 3c extends from the tip of the sliding part 3b toward the base part 2. That is, in the present embodiment, the upper touch lip 3 has substantially a V shape as the upper touch lip 3 gradually separates from the base part 2 as it extends from the root part 3a toward the tip of the sliding part 3b, and returns to the base part 2 side as it extends from the tip of the sliding part 3b toward the tip of the seal part 3c. A tip part 3c1 of the seal part 3c can be separated from or attached to the base part 2. The tip part 3c1 is bent, with respect to a part of the seal part 3c between the tip of the sliding part 3b and the tip part 3c1, to be close to a state in which the tip part 3c1 is parallel to the sealing surface 2b1 of the base part 2. The tip part 3c1 is brought into surface contact with the sealing surface 2b1 when the upper touch lip 3 is in the closed posture by the sliding part 3b being strongly pressed by the door glass 13. A gap between the upper touch lip 3 and the base part 2 is sealed by the tip part 3c1 of the seal part 3c coming in contact with the sealing surface 2b1 of the base part 2 in this way, so that it is possible to prevent water from entering between the upper touch lip 3 and the base part 2.

The lower touch lip 4 is disposed below the upper touch lip 3 as shown in Figs. 2 to 4. That is, the upper touch lip 3 and the lower touch lip 4 are arranged in the vertical direction. The lower touch lip 4, similar to the upper touch lip 3, is tilted between the reference posture and the closed posture in accordance with the door glass 13 being opened and closed. The lower touch lip 4 includes the root part 4a (a lower root part), a sliding part 4b (a lower sliding part), and the reaction force adjustment projection part 4c.

The root part 4a of the lower touch lip 4 is directly fixed to the base part 2. In the present embodiment, the root part 4a of the lower touch lip 4 is fixedly formed on the contact surface 2d1 of the lower wall part 2d of the base part 2. As shown in Figs. 2 to 4, the root part 4a extends from the contact surface 2d1 in the horizontal direction. The sliding part 4b is connected to the tip of the root part 4a. In vertical sections shown in Figs. 2 to 4, the upper surface and the lower surface of the root part 4a are parallel to each other for a certain distance from the contact surface 2d1 toward the tip of the root part 4a to which the sliding part 4b is connected. Thereafter, the surface of the sliding part 4b is connected to the upper surface of the root part 4a to be bent upward from the upper surface of the root part 4a, and the lower surface of the root part 4a is curved upward and connected to the surface of the sliding part 4b. That is, in the present embodiment, the root part 4a does not have a constricted part formed such that both the upper surface and the lower surface approach each other, over a range between a part fixed to the lower wall part 2d and a part connected to the sliding part 4b. According to such a root part 4a, since a part where a thickness dimension is locally reduced is not provided, it is possible to prevent a tilting center from being concentrated at any one place when the sliding part 4b is pressed and tilted by the door glass 13. Therefore, it is possible to prevent only one location of a connection part of the root part 4a with the sliding part 4b from being locally fatigued. Further, a change rate of reaction force acting on the door glass 13 from the lower touch lip 4 when the door glass 13 is raised and lowered becomes more gradual. Therefore, the sliding resistance when the door glass 13 is raised and lowered is unlikely to change, and therefore it is possible to prevent a lifting speed of the door glass 13 from changing suddenly.

As shown in Figs. 2 to 4, the sliding part 4b extends obliquely upward, toward a side opposite to the base part 2 (the door glass 13 side), from the root part 4a and directly abuts on the door glass 13. The sliding part 4b slides with respect to the surface of the door glass 13 when the door glass 13 is raised and lowered. Further, the central part of the sliding part 4b bulges as compared with both end parts (an end part on the root part 4a side and the tip part) of the sliding part 4b. That is, in a direction from the root part 4a toward the tip of the sliding part 4b (an extending direction of the sliding part 4b), a thickness dimension of the central part of the sliding part 4b is the largest, and a thickness dimension of both end parts (the end part on the root part 4a side and the tip part) of the sliding part 4b is smaller than the thickness dimension of the central part. Although not shown in Figs. 2 to 4, a low friction layer that reduces the sliding resistance with the door glass 13 may be formed on the surface of the sliding part 4b.

As shown in Figs. 2 to 4, the reaction force adjustment projection part 4c is provided projecting from the surface of the sliding part 4b on the base part 2 side toward the base part 2. The root of the reaction force adjustment projection part 4c is formed in a fillet shape and is connected to the sliding part 4b. The reaction force adjustment projection part 4c is curved to extend in the same direction in which the tip of the sliding part 4b extends, as the reaction force adjustment projection part 4c extends from the root toward the tip. The reaction force adjustment projection part 4c is separated from the contact surface 2d1 of the base part 2 when the lower touch lip 4 is in the reference posture, and the tip of the reaction force adjustment projection part 4c is brought into contact with the contact surface 2d1 of the base part 2 when the lower touch lip 4 is in the intermediate posture. Further, as the lower touch lip 4 comes closer to the closed posture, as shown in Fig. 4, the reaction force adjustment projection part 4c is tilted such that the tip part thereof approaches the sliding part 4b. That is, a posture of the reaction force adjustment projection part 4c with respect to the sliding part 4b is set such that, as the sliding part 4b tilts toward the base part 2, the tip part of the reaction force adjustment projection part 4c approaches the sliding part 4b by the reaction force adjustment projection part 4c being pressed by the base part 2. The reaction force adjustment projection part 4c generates a large restoring force as the tip part thereof approaches the sliding part 4b, and increases the reaction force acting on the door glass 13 from the lower touch lip 4.

The decorative lip 5 is provided projecting from a connection part between the exterior wall part 2a and the upper wall part 2b of the base part 2 toward the upper touch lip 3 side. The decorative lip 5 covers a space between the upper touch lip 3 and the base part 2. Further, in the present embodiment, as shown in Fig. 2, a length dimension of the decorative lip 5 from the base part 2 is set such that the decorative lip 5 overlaps the tip part 3c1 of the seal part 3c of the upper touch lip 3 in the reference posture when viewed from above. According to such a decorative lip 5, it is possible to suppress the entry of foreign materials and water between the upper touch lip 3 in the reference posture and the base part 2.

The cushioning lip 6 is formed projecting downward from the lower end of the exterior wall part 2a of the base part 2 and elastically deforms by abutting on the door panel 11. The cushioning lip 6 prevents rainwater or the like from entering between the door panel 11 and the outside molding 1 of the present embodiment, and absorbs variations during mounting.

The upper tilt-preventing part 7 projects from the inner wall surface of the exterior wall part 2a toward the door panel 11. The lower tilt-preventing part 8 is disposed below the upper tilt-preventing part 7, and is formed projecting from the tip of the lower end projection part 2a1 of the exterior wall part 2a. The upper tilt-preventing part 7 and the lower tilt-preventing part 8 hold the posture of the outside molding 1 with respect to the door panel 11 by abutting on the door panel 11.

In the outside molding 1 of the present embodiment, when the door glass 13 is closed from the open state, the posture of the upper touch lip 3 and the lower touch lip 4 is tilted from the reference posture to the closed posture via the intermediate posture. In the reference posture, the seal part 3c of the upper touch lip 3 is separated from the sealing surface 2b1, and the reaction force adjustment projection part 4c of the lower touch lip 4 is separated from the contact surface 2d1.

When the door glass 13 is raised, first, the door glass 13 abuts on the sliding part 4b of the lower touch lip 4, and the surface of the door glass 13 is slid to the sliding part 4b. Since the door glass 13 approaches the base part 2 by being raised, the sliding part 4b is gradually tilted toward the base part 2, and as shown in Fig. 3, the reaction force adjustment projection part 4c comes in contact with the contact surface 2d1. When the door glass 13 is raised, the door glass 13 abuts on the sliding part 3b of the upper touch lip 3, and the surface of the door glass 13 is slid to the sliding part 3b. Since the door glass 13 approaches the base part 2 by being raised, the sliding part 3b is tilted toward the base part 2, and the tip part 3c1 of the seal part 3c comes in contact with the sealing surface 2b 1.

Further, when the door glass 13 is closed by being raised, as shown in Fig. 4, the reaction force adjustment projection part 4c is tilted toward the sliding part 4b, and the sliding part 4b is pressed toward the surface of the door glass 13 by a strong reaction force. Further, when the door glass 13 is closed by being raised, as shown in Fig. 4, the tip part 3c1 of the seal part 3c is in surface contact with the sealing surface 2b1 in a wide range.

The outside molding 1 of the present embodiment as described above includes the base part 2 connected to the door panel 11, and the upper touch lip 3 and the lower touch lip 4 supported by the base part 2 and arranged in the vertical direction. Further, the upper touch lip 3 includes the root part 3a fixed to the base part 2, the sliding part 3b connected to the tip of the root part 3a and sliding with respect to the door glass 13, and the seal part 3c that extends from the tip of the sliding part 3b toward the base part 2 and has the tip part 3c1 attachable to and detachable from the base part 2, and the lower touch lip 4 includes the root part 4a fixed to the base part 2, the sliding part 4b connected to the tip of the root part 4a and sliding with respect to the door glass 13, and the reaction force adjustment projection part 4c that projects from the sliding part 4b toward the base part 2, the reaction force adjustment projection part 4c being configured to generate a reaction force acting on the door glass 13 from the sliding part 4b by coming in contact with the base part 2.

According to the outside molding 1 of the present embodiment, since the upper touch lip 3 includes the seal part 3c that extends from the tip of the sliding part 3b toward the base part 2, the seal part 3c can suppress water from entering between the upper touch lip 3 and the base part 2. Further, the tip part 3c1 of the seal part 3c is attachable to and detachable from the base part 2. The tip part 3c1 of the seal part 3c is not fixed to the sliding part 3b or the root part 3a, and is a free end. Therefore, the sliding part 3b can be tilted with a smaller force as compared with a case where the tip part 3c1 of the seal part 3c is fixed to the sliding part 3b or the root part 3a. Therefore, it is possible to reduce the sliding resistance received from the upper touch lip 3 when the door glass 13 is raised and lowered.

In addition to this, the outside molding 1 of the present embodiment includes the reaction force adjustment projection part 4c that generates a reaction force acting on the door glass 13 from the sliding part 4b by the lower touch lip 4 coming in contact with the base part 2, and it is possible for a strong pressing force to act on the door glass 13 as needed while suppressing an increase in the sliding resistance when the door glass 13 is raised and lowered. Therefore, according to the outside molding 1 of the present embodiment, in addition to the effect of improving the sealability as needed while suppressing an increase in the sliding resistance when the door glass 13 is raised and lowered by the lower touch lip 4, it is possible to suppress the entry of water between the upper touch lip 3 and the base part 2 by the upper touch lip 3. Therefore, according to the outside molding 1 of the present embodiment, it is possible to suppress the entry of water while suppressing an increase in the sliding resistance when the door glass 13 is raised and lowered.

Further, in the outside molding 1 of the present embodiment, the tip part 3c1 of the seal part 3c is bent, with respect to a part of the seal part 3c between the tip part 3c1 and the tip of the sliding part 3b, to be close to a state in which the tip part 3c1 of the seal part 3c is parallel to the base part 2. Therefore, the tip part 3c1 of the seal part 3c can be brought into surface contact with the sealing surface 2b1 of the base part 2 widely, and thereby the sealability can be further improved.

Further, in the outside molding 1 of the present embodiment, the base part 2 includes the upper wall part 2b on which the seal part 3c of the upper touch lip 3 abuts, the intermediate wall part 2c disposed below the upper wall part 2b and to which the root part 3a of the upper touch lip 3 is fixed, and the lower wall part 2d disposed below the intermediate wall part 2c and to which the root part 4a of the lower touch lip 4 is fixed and with which the reaction force adjustment projection part 4c of the root part 4a is brought into contact, and the lower wall part 2d is disposed closer to the door glass 13 side than the upper wall part 2b. Therefore, when the door glass 13 is closed, the lower touch lip 4 can be tilted before the upper touch lip 3 is tilted, and reaction force adjustment can be performed more quickly. On the other hand, when the door glass 13 is opened, since the lower touch lip 4 becomes the reference posture later than the upper touch lip 3 does, the reaction force adjustment can be performed more quickly and for a longer time.

Further, in the outside molding 1 of the present embodiment, a fixing surface of the intermediate wall part 2c to which the root part 3a is fixed is the inclined surface 2c1 extending to the door glass 13 side as the inclined surface 2c1 extends from the upper wall part 2b side toward the lower wall part 2d side. Therefore, the upper touch lip 3 can be easily tilted, and the sliding resistance of the upper touch lip 3 can be further reduced.

Further, in the outside molding 1 of the present embodiment, the root part 4a of the lower touch lip 4 extends from the surface of the base part 2, to which the root part 4a is fixed, in the normal direction of this surface of the base part 2, and the upper surface and the lower surface of the root part 4a are parallel to each other over a certain distance from this surface of the base part 2. Therefore, the root part 4a does not have a constricted part formed such that both the upper surface and the lower surface approach each other, over a range between a part fixed to the base part 2 and a part connected to the sliding part 4b. According to such a root part 4a, since a part where a thickness dimension is locally reduced is not provided, it is possible to prevent the tilting center from being concentrated at any one place when the sliding part 4b is pressed and is tilted by the door glass 13, and to prevent only one location of the lower touch lip 4 from being locally fatigued. Further, a change rate of reaction force acting on the door glass 13 from the lower touch lip 4 when the door glass 13 is raised and lowered becomes more gradual. Therefore, the sliding resistance when the door glass 13 is raised and lowered is unlikely to change, and therefore it is possible to prevent a lifting speed of the door glass 13 from changing suddenly.

Further, in the outside molding 1 of the present embodiment, a posture of the reaction force adjustment projection part 4c with respect to the sliding part 4b is set such that, as the sliding part 4b tilts toward the base part 2, the reaction force adjustment projection part 4c is pressed by the base part 2, and the tip part of the reaction force adjustment projection part 4c approaches the sliding part 4b. Therefore, in comparison with a case where the reaction force adjustment projection part 4c abuts on the contact surface 2d1 from the vertical direction, it is possible to moderate a rise of the reaction force acting on the door glass 13 from the lower touch lip 4.

Although the preferred embodiment of the present invention has been described above with reference to the accompanying drawings, it is needless to say that the present invention is not limited to the above-described embodiment. The various shapes, combinations and the like of the constituent members shown in the above-described embodiment are examples, and can be variously changed based on design requirements and the like without departing from the gist of the present invention.

For example, in the above embodiment, a configuration in which the base part 2 is formed of the hard resin has been described. However, the present invention is not limited to this. For example, it is also possible to adopt, as the base part 2, a configuration which includes a metal core material or a configuration using a member in which the metal core material and the hard resin are joined.

Further, in the above embodiment, an example of applying the present invention to an outside molding has been described. However, the present invention is not limited to this, and it is also possible to apply it to other vehicle moldings.

### [Industrial Applicability]

The present disclosure can be applied to a vehicle molding.

### [Reference Signs List]

1: Outside molding (vehicle molding)
2: Base part
2a: Exterior wall part
2a1: Lower end projection part
2b: Upper wall part
2b1: Sealing surface
2c: Intermediate wall part
2c1: Inclined surface
2d: Lower wall part
2d1: Contact surface
2d2: Retaining part
3: Upper touch lip
3a: Root part (upper root part)
3b: Sliding part (upper sliding part)
3c: Seal part
3c1: Tip part
4: Lower touch lip
4a: Root part (lower root part)
4b: Sliding part (lower sliding part)
4c: Reaction force adjustment projection part
11: Door panel
13: Door glass

## Claims

1. A vehicle molding comprising:
a base part connected to a door panel; and
an upper touch lip and a lower touch lip supported by the base part and arranged in a vertical direction,
wherein the upper touch lip includes an upper root part fixed to the base part, an upper sliding part connected to a tip of the upper root part and sliding with respect to an opening and closing type door glass, and a seal part that extends from a tip of the upper sliding part toward the base part and has a tip part attachable to and detachable from the base part, and
the lower touch lip includes a lower root part fixed to the base part, a lower sliding part connected to a tip of the lower root part and sliding with respect to the opening and closing type door glass, and a reaction force adjustment projection part that projects from the lower sliding part toward the base part, the reaction force adjustment projection part being configured to generate a reaction force acting on the opening and closing type door glass from the lower sliding part by coming in contact with the base part.

2. The vehicle molding according to Claim 1, wherein the tip part of the seal part is bent, with respect to a part of the seal part between the tip part and the tip of the upper sliding part, to be close to a state in which the tip part of the seal part is parallel to the base part.

3. The vehicle molding according to Claim 1 or 2,
wherein the base part includes an upper wall part on which the seal part of the upper touch lip abuts, an intermediate wall part disposed below the upper wall part and to which the upper root part of the upper touch lip is fixed, and a lower wall part disposed below the intermediate wall part and to which the lower root part of the lower touch lip is fixed and with which the reaction force adjustment projection part of the lower root part is brought into contact, and
the lower wall part is disposed closer to an opening and closing type door glass side than the upper wall part.

4. The vehicle molding according to Claim 3, wherein the intermediate wall part has a fixing surface to which the upper root part is fixed, and the fixing surface is an inclined surface extending to the opening and closing type door glass side as the inclined surface extends from an upper wall part side toward a lower wall part side.

5. The vehicle molding according to any one of Claims 1 to 4, wherein the lower root part extends from a surface of the base part, to which the lower root part is fixed, in a normal direction of the surface of the base part, and an upper surface and a lower surface of the lower root part are parallel to each other over a certain distance from the surface of the base part.

6. The vehicle molding according to any one of Claims 1 to 5, wherein a posture of the reaction force adjustment projection part with respect to the lower sliding part is set such that, as the lower sliding part tilts toward the base part, the reaction force adjustment projection part is pressed by the base part, and a tip part of the reaction force adjustment projection part approaches the lower sliding part.
